# EUROPEAN PATENT APPLICATION

(11) **EP 4 654 497 A1**
(43) Date of publication of application: **26.11.2025**
(21) Application number: 23917303.2
(22) Date of filing: 20.12.2023
(51) Int. Cl.: H04B 17/11

(54) **CALIBRATION METHOD FOR RADIO FREQUENCY LINK**

(30) Priority: 18.01.2023 CN 202310066040
(71) Applicant: PROSE TECHNOLOGIES (SUZHOU) CO., LTD., Suzhou, Jiangsu 215345 (CN)
(72) Inventor: ZHU, Botao, Suzhou, Jiangsu 215345 (CN); XU, Renzhen, Suzhou, Jiangsu 215345 (CN); CHEN, Lin, Suzhou, Jiangsu 215345 (CN); FAN, Cunxiao, Suzhou, Jiangsu 215345 (CN)
(74) Representative: Isarpatent
(86) International application number: PCT/CN2023/140070
(87) International publication number: WO 2024/152836

(57) **Abstract**

The present disclosure relates to a calibration method for a radio frequency link including: generating, by a signal source module, a first signal with a predetermined frequency in a near-end device, adjusting, by a first digital ATT module, the first signal to generate a second signal with a first predetermined power level, and adjusting, by a second digital ATT module of a first optical module in the near-end device, the second signal to cause an input signal or an output signal of the first optical module to have a second predetermined power level, the first optical module being connected to the signal source module via an optical fiber. Further, the present disclosure relates to a calibration method in a relay device of such as a network expansion unit and in a far-end device. With the help of the above-mentioned calibration method, the distributed antenna system can be intelligently started up.

## Description

### TECHNICAL FIELD

The present disclosure generally relates to the communication technology field and, more particularly, to a calibration method for a radio frequency link.

### BACKGROUND

During the installation process of a distributed antenna system, multiple levels, such as power balance master unit (PBMU) - network extension unit (NEU) -Integrated Remote Unit (IRU) and multiple devices (1PBMU + n NEU + n IRU) exist. Due to hardware differences between devices or varying optical fiber lengths, different links have different line loss, which makes it difficult to activate and debug a product at the project site. Meanwhile, manually adjusting the gain can consume a significant amount of human resources and debugging cycles, which is unbeneficial for the installation process.

In particular, when the distributed antenna system is applied in a real project, due to the impact of the hardware difference, environment factor, and optical fiber link length, the gain of the radio frequency (RF) link can deviate. Meanwhile, the system includes a large amount of distribution points and a long link, if the manual adjustment is performed, significant human resources and long debugging time are needed.

### SUMMARY

In the existing technology, for instance, the manual debugging method is time-consuming, labor-intensive and inefficient. Moreover, the debugging among multi-level devices is interrelated and mutually influential, which will further reduce the debugging efficiency. For the above technical problems, the inventor of the present disclosure has thought of at least providing a network device capable of automatic calibration or debugging each level of device separately, thereby enhancing the debugging efficiency.

In particular, a first aspect of the present disclosure provides a calibration method for a radio frequency link, the calibration method comprises:
generating, by a signal source module, a first signal with a predetermined frequency in a near-end device;
adjusting, by a first digital ATT module, the first signal to generate a second signal with a first predetermined power level; and
adjusting, by a second digital ATT module of a first optical module in the near-end device, the second signal to cause an input signal or an output signal of the first optical module to have a second predetermined power level, the first optical module being connected to the signal source module via an optical fiber.

In this way, the automatic calibration function of the RF link can be provided. Thus, the deployment efficiency of the distributed antenna system can be improved, and the requirement for the deployment personnel can be lowered to significantly lower the deployment cost of the distributed antenna system.

In one embodiment of the present disclosure, adjusting the first signal by the first digital ATT module to generate the second signal with the first predetermined power level further includes:
determining an actual power of the first signal;
comparing the actual power with a target power; and
adjusting a power level of the first signal based on a comparison result to obtain the second signal.

In this way, the power level of the first signal can be adjusted based on the comparison result using the successive approximation method to obtain the second signal, thereby compensating for issues like line loss and allowing the next-level network device to obtain an ideal input signal.

Preferably, in one embodiment of the present disclosure, the calibration method further includes: outputting a first warning signal in response to the comparison result being greater than a predetermined threshold. In this way, the deployment personnel of the distributed antenna system of the present disclosure can receive error prompts. Then, maintenance can be performed on the distributed antenna system to improve maintenance efficiency. Further preferably, in one embodiment of the present disclosure, when the comparison result is greater than the predetermined threshold, the first alarm signal can be visually output on the network topology diagram, which can further facilitate the maintenance work for the maintenance personnel. Further preferably, in one embodiment of the present disclosure, the calibration method can further include visually displaying status information and/or maintenance recommendations related to the near-end device on the network topology diagram.

In one embodiment of the present disclosure, adjusting the second signal by the second digital ATT module of the first optical module in the near-end device to cause the input signal or the output signal of the first optical module to have the second predetermined power level, the first optical module being connected to the signal source module via the optical fiber, further includes:
determining an actual power of the second signal;
comparing the actual power with a target power; and
adjusting a power level of the second signal based on a comparison result to obtain the input or output signal.

In this way, the power level of the second signal can be adjusted using the successive approximation method based on the comparison result to obtain the input signal or the output signal to compensate the line loss to allow the lower level network device to obtain an ideal input signal.

Preferably, in one embodiment of the present disclosure, the calibration method further includes outputting a second warning signal in response to the comparison result being greater than a predetermined threshold. Thus, the deployment personnel can obtain a failure prompt in the present disclosure. Thus, the distributed antenna system can be detected and maintained to improve the repair and maintenance of the distributed antenna system to improve the maintenance efficiency. Further preferably, in one embodiment of the present disclosure, outputting the second warning signal when the comparison result is greater than the predetermined threshold can include visually outputting the second warning signal on the network topology structural diagram, which can further facilitate the maintenance work of the maintenance personnel.

In one embodiment of the present disclosure, the calibration method further includes: adjusting an input signal of a network extension unit (NEU) by a third digital ATT module of a second optical module in the NEU connected to the first optical module in the near-end device via an optical fiber, to cause an input signal of the second optical module to have a third predetermined power level. Then, the input signal of the second optical module of the NEU having the automatic calibration function can include the third predetermined power level, which facilitates the debugging and maintenance work of a next level network device.

In one embodiment of the present disclosure, the calibration method further includes: adjusting an input signal of a network extension unit (NEU) by a third digital ATT module of a second optical module in the NEU connected to the first optical module in the near-end device via an optical fiber, to cause an output signal of the second optical module to have a third predetermined power level. Then, the output signal of the second optical module of the NEU having the automatic calibration function can include the third predetermined power level, which facilitates the debugging and maintenance work of a next level network device.

In one embodiment of the present disclosure, the calibration method further includes: adjusting an input signal of a far-end device by a fourth digital ATT module of a third optical module of the far-end device connected to the second optical module via an optical fiber, to cause an output signal of the third optical module to have a fourth predetermined power level. In this way, the output signal of the third optical module can have the fourth predetermined power level, which facilitates the adjustment and maintenance work of the far end device. Meanwhile, the network coverage can be stabilized and the user experience in the network application can be improved.

In one embodiment of the present disclosure, the calibration method further includes:
receiving a frequency band signal associated with a far-end device; and
determining the predetermined frequency according to the frequency band signal.

In this way, the near-end device can selectively calibrate the frequency bands according to the frequency band of the remote device, which can simplify the calibration work of the near-end device without affecting the calibration quality.

In one embodiment of the present disclosure, the calibration method further includes: receiving control information entering intelligent station opening by the near-end device; and broadcasting the control information to a network extension unit (NEU). Further preferably, in one embodiment of the present disclosure, the calibration method further includes: controlling calibration of the signal source module in a command mode or parameter mode based on the control information.

In summary, the technical solutions of the present disclosure can provide an automatic calibration function for the RF link. Thus, the deployment efficiency of the distributed antenna system can be improved, and the requirement for the deployment personnel can be lowered to significantly lower the deployment cost of the distributed antenna system.

### BRIEF DESCRIPTION OF THE DRAWINGS

The features, advantages and other aspects of the embodiments of the present disclosure will become more apparent with reference to the following detailed description in conjunction with the accompanying drawings, in which several embodiments of the present disclosure are shown in an exemplary and non-limiting manner. In the accompanying drawings:
FIG. 1 is a schematic system block diagram of a distributed antenna system according to some embodiments of the present disclosure.
FIG. 2 is a schematic system block diagram of a near-end device according to some embodiments of the present disclosure.
FIG. 3 is a schematic flowchart of a calibration method for a radio frequency link according to some embodiments of the present disclosure.
FIG. 4 is a schematic diagram of a calibration method for a radio frequency link according to some embodiments of the present disclosure.
FIG. 5 is a schematic diagram of a calibration method for a radio frequency link according to some embodiments of the present disclosure.
FIG. 6 is a schematic flowchart of a successive approximation method according to some embodiments of the present disclosure.

### DETAILED DESCRIPTION OF THE EMBODIMENTS

Embodiments of the present disclosure are described in detail with reference to the accompanying drawings. Although the method and apparatus of the present disclosure include software and/or firmware executed in the hardware of other assemblies. However, these examples are merely illustrative, not restrictive. For example, any or all hardware, software, and firmware assemblies can be implemented only in hardware, only in software, or in any combination of the hardware and software. Although the method and apparatus are described below, those skilled in the art can understand that embodiments of the present disclosure are not used to limit the method and apparatus.

In addition, the flowcharts and block diagrams in the accompanying drawings illustrate possible system architectures, functions, and operations of methods and systems of embodiments of the present disclosure. The functions indicated in the block diagrams may occur in a sequence different from that indicated in the accompanying drawings. For example, two parallel blocks can be performed in parallel, or in opposite sequences, which depends on the related functions. Each block of the flowchart and/or the block diagram and a combination of the blocks of the flowchart and/or the block diagram can be realized by a special hardware-based system executing the defined function or operation or a combination of a special hardware and a computation instruction.

The terms "include," "comprise," and similar terms used in the present disclosure are open-ended terms, i.e., "including but not limited to," indicating that other content may also be included. The term "based on" means "at least partially based on." The term "one embodiment" means "at least one embodiment." The term "another embodiment" means "at least one other embodiment," and so forth.

As previously mentioned, the existing distributed antenna system does not include an automatic calibration function and must be manually adjusted and deployed by an operator, which brings significant inconvenience. Therefore, intelligent calibration and gain adjustment in the link, radio frequency (RF) link detection, connection quality of the optical fiber link and feeder link, providing error prompts, and offering troubleshooting suggestions and modification methods can be necessary to ensure the balance of the output power for the links and satisfy the on-site coverage needs. The present disclosure provides a link gain calibration method based on a module. The link gain of the present module can be automatically calibrated, and the difficulty and cycle of the project debugging can be significantly reduced. The on-site coverage can be satisfied, and the expected link output power can be balanced.

To achieve the above objectives, the present disclosure not only provides hardware devices with automatic calibration functions, such as related near-end devices PBMU, far-end devices IRU, and relay devices (e.g., network expansion units (NEUs)), but also provides a corresponding automatic calibration method.

A signal source module (e.g., a combine module CBM ) may need to automatically calibrate output power of the signal source module. After receiving a start command from the host, the signal source module can automatically activate a Phase-locked Loop PLL chip to generate a corresponding signal at a central frequency point of a frequency band value of an input signal and adjust a digital Attenuation ATT to reach the expected target output power of - 20 dB. After the self-calibration of the signal source module, the signal source module can be ensured to generate a signal as a reference signal. The frequency band value of the signal source module, the central frequency point, the power level of the signal generated by the PLL chip, and the output power can be configured as needed.

A post-stage module (e.g., an Optical Module OP1*8 optical module and a NEU network expansion unit module) can belong to a post-stage link of the signal source module in the link and needs to calibrate the input power of the post-stage module. The signal source module can be configured to generate a signal required by the post-stage module. The post-stage module can detect the input signal and adjust the digital ATT on the input signal link to ensure that the input signal meets the link requirements.

An end-stage module (e.g., IRU) can belong to the far-end device in the link, be arranged at the far end via an optical fiber. The input signal can be attenuated, and the input power may need to be calibrated. After the system calibrates the signal source module and the post-stage module, according to the band value set for the end-stage module, the signal source module can be configured to a corresponding frequency point signal and a power level. The end-stage module can adjust the digital ATT of the input signal according to the reference signal to ensure that each band signal of the end-stage module is the target value result.

In the calibration process, the calibration of the signal source module can be performed first. By generating signals of different frequencies, the signal source module can adjust the digital ATT and ensure stable output power. Then, the calibration of the post-stage module can be performed. After the signal source module generates a stable signal, the signal can be received at the input end of the optical module OP1*8. Then, the optical module OP1*8 can adjust the digital ATT again to ensure that the input power meets the system requirements. Subsequently, the calibration of the end-stage module can be performed. After the signal source module and the optical module OP1*8 are calibrated, the signal source can generate a signal. The signal can access the IRU via the link of the optical module OP1*8. The IRU can adjust the digital ATT of the input end and ensure that the input power meets the system requirements.

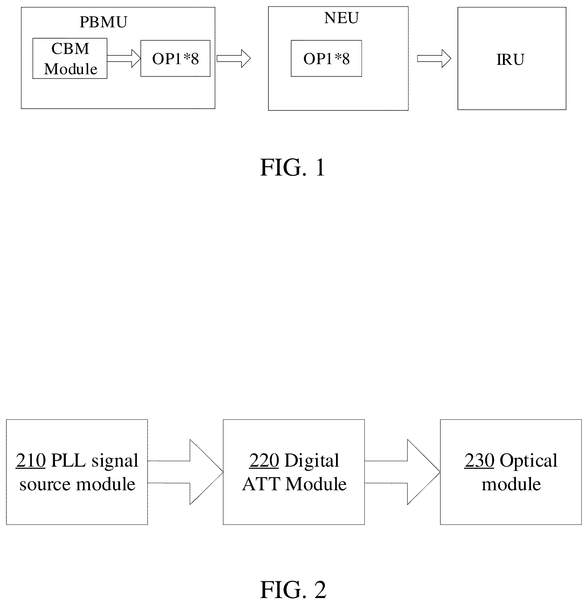

The hardware device of the present disclosure is described in connection with FIG. 1 and FIG. 2. FIG. 1 is a schematic system block diagram of a distributed antenna system according to some embodiments of the present disclosure. As shown in FIG. 1, the near-end device PBMU is connected to 8 network expansion units (NEUs) at most through the optical module OP1*8. Then, each NEU can further be expanded to 8 far-end devices (IRUs) through the optical module OP1*8. If each network device does not have an automatic calibration function, when the signal of a next-level device does not reach the expected target, whether the device has an error or the last-stage device has an error cannot be determined. Normal issues such as line loss cannot be compensated, which brings significant inconvenience for the network deployment.

Network devices with an automatic calibration function of the present disclosure is described in connection with FIG. 2, such as a near-end device PBMU, a relay device of a network expansion unit, and a far-end device IRU. FIG. 2 is a schematic system block diagram of the near-end device according to some embodiments of the present disclosure. As shown in FIG. 2, the near-end device having the automatic calibration function includes a signal source module (i.e., a PLL signal source module 210). The PLL signal source module 210 can be configured to generate a first signal with an expected frequency. In addition, the near-end device having the automatic calibration function of the present disclosure further includes a first digital ATT module 220. The first digital ATT module 220 can be configured to adjust the first signal in a successive proximation method to generate a second signal having the first expected power level. Then, the signal generated by the signal source module 210 can be ensured to have an expected frequency and function to provide a basis for the subsequent debugging. Moreover, the near-end device having the automatic calibration function also includes a first optical module (included in the signal output module 230 shown in FIG. 2). The first optical module 230 is connected to the signal source module 210 via an optical fiber and is configured to adjust the second signal with the help of the second digital ATT module (not shown in the figure) of the first optical module, e.g., using the successive approximation method, to cause the input signal or output signal of the first optical module to have the second expected power level. Thus, the input signal and the output signal can be adjusted, as long as one of the signals can achieve the expected power level, the failure detection of the device can be facilitated. In FIG. 2, the near-end device of the present disclosure can provide the automatic calibration function of the RF link to improve the internal deployment efficiency of the distributed antenna system and lower the requirement for the deployment personnel. Thus, the deployment cost of the distributed antenna system can be greatly reduced.

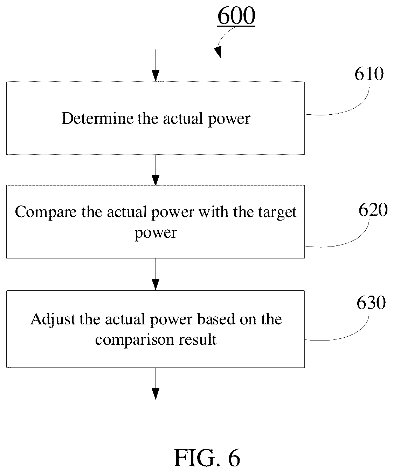

Additionally, when the power is adjusted, the successive approximation method can be used. FIG. 6 is a schematic flowchart of the successive approximation method 600 according to some embodiments of the present disclosure. The successive approximation method 600 includes at least, first, determining the actual power of a signal (610), then comparing the actual power with a target power (620), and subsequently adjusting the actual power based on the comparison result (630). Thus, the power level of the first signal can be adjusted based on the comparison result using the successive approximation method to obtain the second signal, thereby compensating for issues like line loss and allowing the next-level network device to obtain an ideal input signal.

In particular, when performing the successive approximation method, the actual power P of one signal may need to be determined first to determine whether the actual power P satisfies the predetermined requirement. Thus, the actual power P needs to be compared with the target power T. Then, the difference Delta is the difference between the actual power P and the target power T. Since the digital ATT has an inherent adjustment range, the difference Delta may need to be compared with the predetermined threshold range of the ATT. If the difference Delta exceeds the predetermined threshold range, with the digital ATT, the target power cannot be achieved. Thus, a warning signal may need to be issued to prompt the operator. If the difference Delta is within the predetermined threshold range of the ATT, with the digital ATT, the target power can be achieved. Then, whether Delta is in a range of [-1dB, 1dB] may need to be determined. If Delta is not in the range, a large adjustment value may be needed for adjustment. On the contrary, if Delta is in the range of [-1dB, 1dB], a small adjustment value (e.g., 0.1dB) may be needed for adjustment. Then, the actual power of the signal can be adjusted with a 0.1dB step for the adjustment value. In some embodiments, if Delta is zero, the digital ATT has finished the task or no adjustment is needed.

For example, the actual power can be -12 dB, the target power can be -20 dB, and the digital ATT adjustment range of [-5 dB, 5 dB], the difference Delta is 8 dB, which exceeds the adjustment range of the digital ATT, making it impossible to reach the target power. An alert can be issued to inform the operator that the automatic adjustment will fail. In another scenario, the actual power can be -16 dB, the target power can be -20 dB, and a digital ATT adjustment range can be [-5 dB, 5 dB]. The difference Delta is 4 dB, which is within the adjustment range but beyond the range of [-1 dB, 1 dB]. Thus, a larger calibration value, e.g., 4 dB can be directly adjusted to achieve the target power. Then, the automatic adjustment can realize the adjustment of the actual power with a high efficiency. In another scenario, the actual power can be -19 dB, the target power can be -20 dB, and the digital ATT adjustment range can be [-5 dB, 5 dB]. Then, the difference Delta 1 dB, which is in the adjustment range of the digital ATT and also within the above arrange of [-1 dB, 1 dB]. With a relatively small adjustment value, e.g., each time 0.1 dB can be adjusted to achieve the target power. Such automatic adjustment can achieve the actual power with a high-precision method until Delta is zero. Accordingly, if Delta is zero from the beginning, the digital ATT has finished the task, or no adjustment is needed.

In one embodiment of the present disclosure, adjusting the actual power based on the comparison result can include adjusting the actual power with a first calibration value when the comparison result is outside the predetermined threshold range, or adjusting the actual power with a second calibration value when the comparison result is within the predetermined threshold range. The first calibration value can be greater than the second calibration value. That is, when the difference between the actual power and the target power is relatively large, a relatively large calibration value can be used to adjust the actual power. When the difference between the actual power and the target power is relatively small, a relatively small calibration value can be used to adjust the actual power. Thus, the calibration efficiency and the calibration precision can be considered at the same time. The present method can support a multi-level device and a multi-segment calibration with matched standards of 4T4R and 2T2R.

Preferably, in one embodiment of the present disclosure, when the comparison result is greater than the predetermined threshold, the near-end device can output a first alarm signal. Then, the deployment personnel of the distributed antenna system of the present disclosure can receive error prompts. Then, maintenance can be performed on the distributed antenna system to improve maintenance efficiency. In embodiments of the present disclosure, when the comparison result is greater than the predetermined threshold, the first alarm signal can be visually output on the network topology diagram, which can further facilitate the maintenance work for the maintenance personnel. In embodiments of the present disclosure, the calibration method can further include visually displaying status information and/or maintenance recommendations related to the near-end device on the network topology diagram. For example, the power values before and after calibration and the calibration value can be displayed to allow the maintenance personnel to perform manual diagnostics when necessary.

In addition to performing power compensation at the first digital ATT, power compensation can also be performed on the second digital ATT of the first optical module 230. In some embodiments, the second digital ATT module can be further configured to determine the actual power of the second signal, compare the actual power with the target power, and adjust the power level of the second signal to obtain the input signal or the output signal using the successive approximation method based on the comparison result. In this method, the power level of the second signal can be adjusted using the successive approximation method based on the comparison result to obtain the input signal or the output signal to compensate the line loss to allow the lower level network device to obtain an ideal input signal.

If the second digital ATT can be compensated, the normal power compensation can be performed. However, if exceeding the compensation range, that is, the comparison result is greater than the predetermined threshold, the near-end device can output the second warning signal. Thus, the deployment personnel of the distributed antenna system of the present disclosure can obtain the error prompts. Then, maintenance can be performed on the distributed antenna system to improve maintenance efficiency. In embodiments of the present disclosure, when the comparison result is greater than the predetermined threshold, the second warning signal can be visually output on the network topology diagram, which can further facilitate the maintenance work for the maintenance personnel.

After receiving the alarm signals, if appropriately combined with upper computer software, a visual presentation can be achieved to further facilitate the operation of the maintenance and debugging personnel. In the upper computer software, besides displaying the alarm information, e.g., the power values before and after the calibration and calibration values can be displayed. Thus, the maintenance personnel can be in manual diagnostics when necessary.

The above illustrates the principle block diagram of the near-end device of the present disclosure. Similarly, the network expansion unit (NEU) as a relay device and the far-end device (IRU) can also be configured to implement corresponding operations. In some embodiments, the network expansion unit with the automatic calibration function of the present disclosure can include a second optical module. The second optical module can be connected to the first optical module of the near-end device via the optical fiber and can include a third digital ATT module. The third digital ATT module can be configured to adjust the input signal of the NEU using the successive approximation method. Thus, the input signal or the output signal of the second optical module can include a third predetermined power level. Then, the input signal of the second optical module of the NEU having the automatic calibration function can include the third predetermined power level, which facilitates the debugging and maintenance work of a next level network device.

Preferably, in one embodiment of the present disclosure, the third digital ATT module of the NEU can be configured to determine the actual power of the input signal, compare the actual power with the target power, and adjust the power level of the input signal using the successive approximation method based on the comparison result to cause the input or output signal of the second optical module to have the third predetermined power level. Thus, compensation can be performed on the line loss to cause the next level network device to obtain a relatively ideal input signal.

Similarly, the far end device having the automatic calibration function of the present disclosure can include a third optical module. The third optical module can include a fourth digital ATT module. The fourth digital ATT module of the third optical module connected to the second optical module via the optical fiber in the far end device can be configured to adjust the input signal of the far end device using the successive approximation method to cause the output signal of the third optical module to have a fourth predetermined power level. Thus, the output signal of the third optical module can have the fourth predetermined power level, which facilitates the adjustment and maintenance work of the far end device. Meanwhile, the network coverage can be stabilized and the user experience in the network application can be improved.

In one embodiment of the present disclosure, the fourth digital ATT module of the far end device can be configured to determine the actual power of the input signal of the far end device, compare the actual power with the target power, and adjust the power level of the input signal using the successive approximation method based on the comparison result to cause the output signal of the third optical module to have the fourth predetermined power level. Thus, the power level of the input signal can be adjusted using the successive approximation method based on the compared result to cause the output signal of the third optical module to have the fourth predetermined power level. Thus, the line loss can be compensated to cause the terminal device to obtain an ideal input signal.

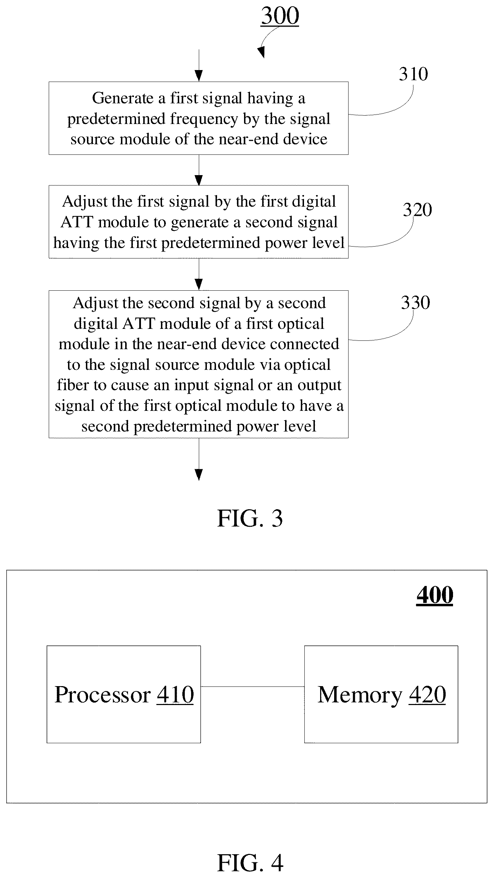

When the above three types of network devices of the present disclosure form a distributed antenna system, the calibration method for the RF link of the present disclosure can be implemented automatically in the distributed antenna system. FIG. 3 is a schematic flowchart of a calibration method 300 for a radio frequency link according to some embodiments of the present disclosure. As shown FIG. 3, the calibration method 300 includes generating a first signal having a predetermined frequency by the signal source module of the near-end device (310), adjusting the first signal by the first digital ATT module to generate a second signal having the first predetermined power level (320), and adjusting the second signal by the second digital ATT module of the first optical module connected to the signal source module via the optical fiber in the near-end device, to cause the input signal or the output signal of the first optical module to have the second predetermined power level (330). Thus, the automatic calibration function of the RF link can be provided. Thus, the deployment efficiency of the distributed antenna system can be improved, and the requirement for the deployment personnel can be lowered to significantly lower the deployment cost of the distributed antenna system.

In addition to the above steps, adjusting the first signal to generate the second signal having the first predetermined power level by the first digital ATT module can further include determining the actual power of the first signal, comparing the actual power with the target power, and adjusting the power level of the first signal based on the comparison result to obtain the second signal. The power level of the first signal can be adjusted using the successive approximation method based on the comparison result to obtain the second signal. Thus, the line loss can be compensated, and the next level network device can obtain an ideal input signal.

Further, in embodiments of the present disclosure, the calibration method can further include outputting a first warning signal when the comparison result is greater than the predetermined threshold. Then, the deployment personnel of the distributed antenna system of the present disclosure can obtain an error prompt to detect and maintain the distributed antenna system to improve maintenance efficiency. In one further embodiment of the present disclosure, when the comparison result is greater than the predetermined threshold, outputting the warning signal further including visually outputting the first warning signal on the network topology structural diagram, which can further facilitate the repair and maintenance work of the maintenance personnel.

In one embodiment of the present disclosure, adjusting the second signal by the second digital ATT module of the first optical module connected to the signal source module via the optical fiber in the near-end device to cause the input signal or the output signal of the first optical module having the second predetermined power can further include determining the actual power of the second signal, comparing the actual power with the target power, and adjusting the power level of the second signal based on the comparison result to obtain the output signal or the input signal. The power level of the second signal can be adjusted using the successive approximation method based on the comparison result to obtain the input signal or the output signal. Thus, the line loss can be compensated, and the next level network device can obtain an ideal input signal.

Preferably, in one embodiment of the present disclosure, the calibration method further includes outputting a second warning signal when the comparison result is greater than the predetermined threshold. Thus, the deployment personnel can obtain a failure prompt in the present disclosure. Thus, the distributed antenna system can be detected and maintained to improve the repair and maintenance of the distributed antenna system to improve the maintenance efficiency. In embodiments of the present disclosure, outputting the second warning signal when the comparison result is greater than the predetermined threshold can include visually outputting the second warning signal on the network topology structural diagram, which can further facilitate the maintenance work of the maintenance personnel.

After the near-end device such as PBMU is finished with calibration, the relay device such as the NEU of the next level can also perform the following step, i.e., adjusting the input signal of the NEU by the third digital ATT of the second optical module connected to the first optical module of the near-end device via an optical fiber in the NEU to cause the input signal of the second optical module to have the third predetermined power level. Thus, the input signal of the second optical module can have the third predetermined power level, which facilitates the adjustment and maintenance work of the network device of the next level.

Alternatively, in one embodiment of the present disclosure, the calibration method can further include adjusting the input signal of the NEU by the third digital ATT of the second optical module connected to the first optical module of the near-end device via the optical fiber in the NEU to cause the output signal of the second optical module to have the third predetermined power level. Thus, the output signal of the second optical module can have the third predetermined power level, which facilitates the adjustment and maintenance work of the network device of the next level.

Then, in the far end device, the calibration method can further include adjusting the input signal of the far end device by the fourth digital ATT of the third optical module connected to the second optical module of the far end device via the optical fiber, to cause the output signal of the third optical module to have the fourth predetermined power level. Thus, the output signal of the third optical module can have the fourth predetermined power level, which facilitates the adjustment and maintenance work of the far end device. Meanwhile, the network coverage can be stable, and the user experience for the network application can be improved.

In the performing process, a broadcast method can be applied. That is the frequency band of the far end device is unknown. However, the frequency bands in the broadcast method can be sub-sets of the frequency band of the far end device. In some other embodiments, after the query is performed, a targeted calibration can be performed. That is, in embodiments of the present disclosure, the calibration method can further include receiving a frequency band signal associated with the far end device and determining the predetermined frequency according to the frequency band signal. Thus, the near-end device can selectively calibrate the frequency bands according to the frequency band of the remote device, which can simplify the calibration work of the near-end device without affecting the calibration quality.

In general, in the calibration method of the present disclosure, a special RF adjustment device may not be needed in the system. Thus, the system can have a low cost and can have a normal connection via the device optical fibers. After the device starts normally, a user can trigger the process with a single click on a webpage (e.g., click on a station-opening button) to automatically detect the connection quality of the RF link, optical fiber link, feed line link, automatically adjust the RF gain of the overall link, and save the gain adjustment statuses and results of the CBM and optical module OP1*8 of the near-end device PBMU, the optical module OP1*8 of the relay device of the NEU, and the far end device IRU. Meanwhile, the topology diagram can be displayed on the webpage, and suggestions to the corresponding amendments can be provided for errors and abnormalities to facilitate the project personnel for quick positioning, which significantly improves the efficiency. The operation can be convenient and have low requirements for the operator. Meanwhile, the method can be compatible with a plurality of system standards such as 4T4R, 2T2R, and 1T1R, and can also be compatible with multi-level devices (PBMU-NEU-IRU).

According to the description of FIGs. 1 to 3 above, the first level is the PBMU-CBM, which automatically calibrates according to the user-configured frequency band (supporting full frequency band) and outputs the corresponding frequency and power. For example, -20 dB can be output to the optical module OP1*8 of the PBMU through the connection optical fiber inside the PBMU. The optical module OP18 of the PBMU can automatically calibrate the input power and output -20 dB. After completion, the results can be displayed in a table. Considering the optical fiber can have insertion loss or fiber fusion loss, this method can include automatic adjustment to ensure consistent power output from the optical module OP1*8 of the PBMU to the optical module OP1*1 of the NEU. Similarly, the optical module OP1*1 of the NEU can also follow the same logic to ensure consistent power output to the IRU. The IRU can automatically adjust the output power to the target value according to the configured power level and target value to ensure stable coverage and consistent power. The result of the intelligent station-opening process can be displayed on the webpage at the end of the process. The device topology diagram can be displayed, errors can be marked in red, and modification suggestions can be provided for incorrect connections, which is highly efficient and simple to operate.

For example, the system can be 2T2R, i.e., 1 PBMU + 2 NEUs + 2 IRUs. After the optical fibers of the network devices are normally connected and communication is normal, the user can click the intelligent station-opening button on the WEB webpage to trigger the PBMU to enter the intelligent station-opening status. Then, PBMU can broadcast to the NEU, and the NEU can enter the intelligent station-opening status. Then, the PBMU can send a control command (in the command mode, command words for transmission can be predefined in the system, e.g., 01 for start, 02 for query, 03 for end, etc.) The CBM can respond after receiving the command, or adopt an OID mode where a parameter is defined in the CBM. The host can set the parameter of the CBM to different statuses. The CBM can begin calibration, end the process, etc., according to the different statuses of the parameter, which are included in the controls of the CBM, OP, and IRU. The CBM can begin self-calibration. According to the configured frequency band (e.g., B1, B3, and N78, supporting 8 frequency bands selected from the full frequency band for configuration) and the power (e.g., -20dB), the consistent power output can be ensured. Subsequently, the PBMU can control the CBM to generate the power of a special frequency band. For example, -20dB of 3.5GHz can be generated. Then, the control command can be sent to the optical module OP of the PBMU. The optical module OP of the PBMU can enter the intelligent station-opening process. The power input to the optical module OP of the PBMU by the CBM of the PBMU can be calibrated to add when less and reduce when more for self-adjustment with a configured range of (0±5 dB). Then, consistent power of -20 dB input to the optical module OP of the PBMU can be ensured. Then, the power can be output downward to the NEU. Subsequently, after the optical module OP of the PBMU is finished, the PBMU can broadcast the NEU. The intelligent station-opening processes of the optical modules OPs of the two NEUs can begin. The NEU can send the command to control the optical module OP of the NEU. The logic can be the same as the optical module OP of the PBMU to ensure the consistent power of -20dB input to the optical module OP of the NEU, which can be then output to the IRU. Then, the PBMU can broadcast the frequency bands used by the entire system to the NEU, and the NEU can then broadcast the frequency bands to the IRU to allow the IRU to perform calibration. Since the frequency band of each IRU is a sub-set of the frequency band of the entire system, for each configured frequency band of each IRU, a pre-station-opening command can be received without missing, i.e., a system code broadcast mode. Since the signal of the far end is a sub-set of the near end (e.g., the near end supports three frequency bands N78, B28, B20, with three IRUs where IRU1 supports N78, IRU2 supports B28, and IRU3 supports N78 and B20. When the PBMU broadcasts B20, IRU1 and IRU2 receive the message without action, while IRU3, which has B20, begins automatic calibration. When the PBMU broadcasts N78, IRU2 receives the message without action. However, IRU1 and IRU3 have N78 and begin automatic calibration.). Therefore, the near end signal can be broadcast. Then, the IRU can complete the station-opening process for all frequency bands, output the power of the configured power level of the frequency band, which has consistency. The optical module OP of the PBMU and the optical module OP of the NEU can have input power. In some other embodiments, the calibration can be performed regarding the output power.

The above calibration method is sequential calibration level by level. However, selective calibration can also be supported. For example, through upper computer software, only the relay device of the network extension unit (NEU) or only the far end devices (IRU) can be calibrated.

In some embodiments, the broadcast method may not be applied. That is, the PBMU does not broadcast all configured frequency bands in sequence. Instead, the frequency band of the IRU under each NEU can be queried. An array can be then formed by removing the weights. Broadcasting can be performed according to the content of the array in the system frequency band. However, the efficiency can be improved when the IRU uses a few frequency bands, and only the configured frequency bands of the IRU can be sent. For example, the system code query and transmission mode can correspond to the above system code broadcast and can be applied when the all frequency bands of the IRU of the station are few. For example, the PBMU can be configured with 8 frequency bands (the device supports the full frequency band with maximal 16 configured frequency bands). However, all the IRUs of the station may only use N78, and broadcasting may not needed. Instead, IRU can be queried first, and the weight can be removed to obtain only one frequency band N78. Then, only N78 may need to be sent.

The control response and communication process between the host and slave computers can adopt a command mode or a parameter OID mode. The CBM can perform full frequency band self-calibration or calibration according to the configured frequency bands. In summary, in embodiments of the present disclosure, the calibration method can further include receiving control information entering the intelligent station-opening by the near-end device and broadcasting the control information to the NEU. In embodiments of the present disclosure, the calibration method further includes controlling the calibration of the signal source module based on the control information in the command mode or the parameter OID mode.

The calibration method and the corresponding network device of the present disclosure can include at least one of the following advantages.

First, the operation is simple. The user can trigger the intelligent station opening with one click on the webpage. The connection quality of the RF link, optical fiber link, and feed line link can be automatically detected. The RF gain of the entire link can be automatically adjusted. The topology and diagnostic information can be displayed. The modification suggestions can be provided, which facilitates the project installation and troubleshooting. The efficiency can be significantly improved.

Second, a plurality of system standards, such as 4T4R, 2T2R, and 1T1R, can be supported, and the multi-level device can be supported. The process can be fast without additional special RF detection devices or blocking devices. The technical threshold for station-opening personnel can be lowered, and the cost can be low. A high success rate can be achieved for station opening with high reliability.

Furthermore, the target power of the far end device can be configured to support IRU networking with a plurality of power levels, while being compatible with different power levels and standards. The system can also support intelligent station-opening for full frequency band device networking, and the IRU can be controlled, and the IRU can respond. For example, IRUs of various standards, such as N78, B28, B20, etc., can be supported.

Additionally, the pre-station-opening process can include the solution of the PBMU detecting the NEU and IRU, including broadcasting the system code and forwarding the system code to the IRU after the NEU receives the system code. The system code of the IRU can be included in a sub-set. The query and transmission may not be performed one by one, or a small sub-set can be sent after query, which supports mixed configurations of a plurality of different frequency bands. Then, the input can be detected, and the output can be detected.

Subsequently, the diagnostic WEB page can display the topology in a graphical and tabular format, showing the results of the intelligent station-opening with a combination of text and images. Devices with abnormalities can be marked in red, and each incorrect link can be highlighted. Specific suggestions and modification methods can be provided for the incorrect information of each device to prompt intuitively. For example, for devices that cannot perform automatic calibration, suggestions can be made based on specific parameters, such as manually inspecting the device or the previous transmission link of the device.

In addition to implementing the above technical solution in a software control method, the above technical solution can also be implemented through a corresponding hardware circuit. In other words, the above display control method can be implemented through the software stored in a computer-readable storage medium combined with corresponding hardware members. The computer-readable storage medium stores the computer-readable program instructions for executing various embodiments of the present disclosure. The computer-readable storage medium can be a tangible device that retains and stores instructions performed by an instruction execution device. The computer-readable storage medium can include, but is not limited to, an electrical storage device, a magnetic storage device, an optical storage device, an electromagnetic storage device, a semiconductor storage device, or any suitable combination thereof. More specific examples of computer-readable storage medium (not exhaustive) can include portable computer disks, a hard drive, random access memory (RAM), read-only memory (ROM), erasable programmable read-only memory (EPROM or flash memory), static random access memory (SRAM), portable compact disc read-only memory (CD-ROM), digital versatile discs (DVD), a memory stick, floppy disks, a mechanical encoding device such as a punch card or a raised structure within grooves, and any suitable combination thereof. The computer-readable storage medium is not interpreted as a transient signal, such as radio waves or other freely propagating electromagnetic waves, electromagnetic waves transmitted through waveguides or other transmission media (e.g., optical pulses through fiber optic cables), or electrical signals transmitted through wires.

FIG. 4 is a schematic diagram of a calibration apparatus 400 for a radio frequency link according to some embodiments of the present disclosure. As shown in FIG. 4, the calibration apparatus 400 for an RF link includes a processor 410 (e.g., a central processing unit (CPU)) and a memory 420 coupled to the processor 410. The memory 420 can be used to store computer-executable instructions that, when executed, cause the processor 410 to perform the calibration method 300 for an RF link above. The processor 410 and memory 420 are connected via a bus, and an input/output (I/O) interface is also connected to the bus. The display control apparatus 400 further includes an output unit.

In addition, the calibration apparatus 400 for the RF link can also include a plurality of members connected to the I/O interface (not shown in FIG. 4), including but not limited to an input unit such as a keyboard, a mouse, etc., an output unit such as various types of displays, speakers, etc., a storage unit such as disks, optical discs, etc., and a communication unit such as a network card, a modem, and a wireless communication transceiver. The communication unit can allow the calibration apparatus 400 for the RF link to exchange information/data with another device through a computer network such as the Internet and/or various telecommunication networks.

Then, the computer-executable instructions stored in the memory 420, when executed, can cause the processor 410 to execute the calibration method for the RF link of embodiments of the present disclosure shown in FIG. 3. The calibration method can be implemented in the form of the calibration apparatus for the RF link.

The present disclosure also provides a computer program product. The computer program product can be tangibly stored in the computer-readable storage medium and include computer-executable instructions that, when executed, cause at least one processor to perform the methods of embodiments of the present disclosure.

In general, embodiments of the present disclosure can be implemented in hardware, dedicated circuits, software, firmware, logic, or any combination thereof. Some aspects can be implemented in hardware, while other aspects can be implemented in firmware or software executable by a controller, microprocessor, or other computing devices. When aspects of embodiments of the present disclosure are illustrated or described as block diagrams, flowcharts, or using other graphical representations, the blocks, apparatuses, systems, techniques, or methods described here can be implemented in hardware, software, firmware, dedicated circuits or logic, general-purpose hardware or controllers, other computing devices, or any combination thereof.

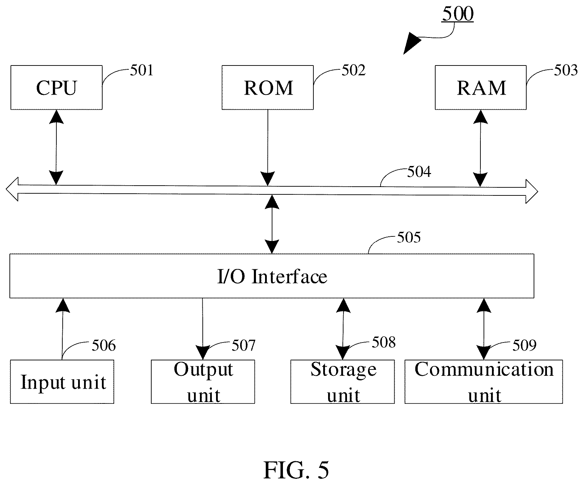

FIG. 5 is a schematic diagram of a calibration apparatus 500 for a radio frequency link according to some embodiments of the present disclosure. The calibration apparatus 500 for the RF link can be configured to implement the calibration method 300 for the RF link shown in FIG. 3. As shown in FIG. 5, the calibration apparatus 500 includes a central processing unit (CPU) 501 (e.g., a processor) configured to perform various appropriate actions and processes according to computer program instructions stored in read-only memory (ROM) 502 or loaded into random access memory (RAM) 503 from the storage unit 508. The RAM 503 can also store various programs and data required for the operation of the apparatus 500. The CPU 501, ROM 502, and RAM 503 are connected to each other through a bus 504. An input/output (I/O) interface 505 is also connected to the bus 504.

A plurality of members of the calibration apparatus 500 for the RF link are connected to the I/O interface 505 and include an input unit 506, such as a keyboard, mouse, etc., an output unit 507, such as various types of displays, speakers, etc., a storage unit 508, such as disks, optical discs, etc., and a communication unit 509, such as a network card, modem, wireless communication transceiver, etc. The communication unit 509 can allow the calibration apparatus 500 for the RF link to exchange information/data with another device through computer networks such as the Internet and/or various telecommunication networks.

The various methods above, e.g., the calibration method for the RF link, can be executed by the processing unit 501. For example, in some embodiments, the calibration method for the RF link 300 can be implemented as a computer software program, which is tangibly stored in a machine-readable medium, such as the storage unit 508. In some embodiments, a part or all of the computer program can be loaded and/or installed onto the calibration apparatus 500 for the RF link via the ROM 502 and/or the communication unit 509. When the computer program is loaded into the RAM 503 and executed by the CPU 501, one or more actions or steps of the method 300 described above can be performed and include:
generating the first signal with the predetermined frequency via the signal source module in the near-end device;
adjusting the first signal by the first digital ATT module to generate the second signal with the first predetermined power level; and
adjusting the second signal by the second digital ATT module of the first optical module in the near-end device connected to the signal source module via an optical fiber, to cause the input signal or output signal of the first optical module have the second predetermined power level.

Although various embodiments of the present disclosure described above can be implemented in hardware or dedicated circuits, the display control apparatus described above can be implemented in hardware or software. In the 1990s, whether a technical improvement belongs to a hardware improvement (e.g., an improvement to diode, transistor, or switch circuit structure) or a software improvement (e.g., an improvement to method processes) can be easily determined. However, with the continuous development of the technology, many process improvement methods today can almost be realized by programming the improved method processes into hardware circuits. That is, the hardware circuit structure can be changed, and such improvement for the method processes can also be considered as the direct improvement for the hardware circuit structure. Thus, man cannot say that an improvement of a method process cannot be implemented by a hardware entity module. For example, the programmable logic device (PLD) (such as field-programmable gate array (FPGA)) is an integrated circuit of such type, whose logic functions can be determined by the user programming the device. A designer can program a digital system to be "integrated" onto a single programmable logic device without requiring a chip manufacturer to design and produce a dedicated integrated circuit chip. Moreover, instead of manually making integrated circuit chips, such programming can be mostly achieved by using "logic compilers" similar to software compilers used during program development. Before compilation, the original code must be written in a specific programming language known as a hardware description language (HDL). There are many types of HDL, not just one, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, Ruby Hardware Description Language (RHDL), etc. Currently, the most commonly used are Very-High-Speed Integrated Circuit Hardware Description Language (VHDL) and Verilog. Those skilled in the art should understand that the method process can be easily realized in hardware circuits by logically programming the method processes with the aforementioned hardware description languages into the integrated circuits.

Computer-readable program instructions or computer program products for implementing embodiments of the present disclosure can also be stored in the cloud. When needed, the user can access the computer-readable program instructions used to execute embodiments of the present disclosure stored in the cloud through mobile internet, fixed networks, or other networks to implement the technical solutions of embodiments of the present disclosure.

In summary, the technical solutions of the present disclosure can provide an automatic calibration function for the RF link. Thus, the deployment efficiency of the distributed antenna system can be improved, and the requirement for the deployment personnel can be lowered to significantly lower the deployment cost of the distributed antenna system.

The above descriptions are merely some embodiments of the present disclosure and are not used to limit embodiments of the present disclosure. For those skilled in the art, various modifications and changes can be made to embodiments of the present disclosure. Any modifications, equivalent replacements, improvements, etc., made within the spirit and principles of embodiments of the present disclosure should be included within the scope of embodiments of the present disclosure.

Although embodiments of the present disclosure have been described with reference to some embodiments of the present disclosure, embodiments of the present disclosure are not limited to the described embodiments. Embodiments of the present disclosure are intended to cover various modifications and equivalent arrangements included within the spirit and scope of the appended claims. The scope of the claims should conform to the broadest explanation to include all such modifications, equivalent structures, and functions.

## Claims

1. A calibration method for a radio frequency link, wherein the calibration method comprises:
generating, by a signal source module, a first signal with a predetermined frequency in a near-end device;
adjusting, by a first digital ATT module, the first signal to generate a second signal with a first predetermined power level; and
adjusting, by a second digital ATT module of a first optical module in the near-end device, the second signal to cause an input signal or an output signal of the first optical module to have a second predetermined power level, the first optical module being connected to the signal source module via an optical fiber.

2. The calibration method according to claim 1, wherein adjusting the first signal by the first digital ATT module to generate the second signal with the first predetermined power level further includes:
determining an actual power of the first signal;
comparing the actual power with a target power; and
adjusting a power level of the first signal based on a comparison result to obtain the second signal.

3. The calibration method according to claim 2, further comprising:
outputting a first warning signal in response to the comparison result being greater than a predetermined threshold.

4. The calibration method according to claim 3, wherein outputting the first warning signal in response to the comparison result being greater than the predetermined threshold further includes:
visually outputting the first warning signal on a network topology diagram.

5. The calibration method according to claim 2, further comprising:
visually outputting status information and/or a maintenance suggestion associated with the near-end device on a network topology diagram.

6. The calibration method according to claim 1, wherein adjusting the second signal by the second digital ATT module of the first optical module in the near-end device to cause the input signal or the output signal of the first optical module to have the second predetermined power level, the first optical module being connected to the signal source module via the optical fiber, further includes:
determining an actual power of the second signal;
comparing the actual power with a target power; and
adjusting a power level of the second signal based on a comparison result to obtain the input or output signal.

7. The calibration method according to claim 5, further comprising:
outputting a second warning signal in response to the comparison result being greater than a predetermined threshold.

8. The calibration method according to claim 7, wherein outputting the second warning signal in response to the comparison result being greater than the predetermined threshold further includes:
visually outputting the second warning signal on a network topology diagram.

9. The calibration method according to claim 1, wherein the calibration method further comprises:
adjusting an input signal of a network extension unit (NEU) by a third digital ATT module of a second optical module in the NEU connected to the first optical module in the near-end device via an optical fiber, to cause an input signal of the second optical module to have a third predetermined power level.

10. The calibration method according to claim 1, wherein the calibration method further comprises:
adjusting an input signal of a network extension unit (NEU) by a third digital ATT module of a second optical module of the NEU connected to the first optical module in the near-end device via an optical fiber, to cause an output signal of the second optical module to have a third predetermined power level.

11. The calibration method according to claim 1, wherein the calibration method further comprises:
adjusting an input signal of a far-end device by a fourth digital ATT module of a third optical module of the far-end device connected to the second optical module via an optical fiber, to cause an output signal of the third optical module to have a fourth predetermined power level.

12. The calibration method according to claim 1, wherein the calibration method further comprises:
receiving a frequency band signal associated with a far-end device; and
determining the predetermined frequency according to the frequency band signal.

13. The calibration method according to claim 1, wherein the calibration method further comprises:
receiving control information entering intelligent station opening by the near-end device; and
broadcasting the control information to a network extension unit (NEU).

14. The calibration method according to claim 13, wherein the calibration method further comprises:
controlling calibration of the signal source module in a command mode or parameter mode based on the control information.
